# EUROPEAN PATENT APPLICATION

(11) **EP 0 920 988 A1**
(43) Date of publication of application: **09.06.1999**
(21) Application number: 97934745.7
(22) Date of filing: 08.08.1997
(51) Int. Cl.: B32B 27/32

(54) **LAMINATE**

(30) Priority: 12.08.1996 JP 21260296; 29.11.1996 JP 31928096
(71) Applicant: IDEMITSU PETROCHEMICAL CO., LTD., Tokyo 108-0014 (JP)
(72) Inventor: FUKUDA, Kazuyuki, Idemitsu Petrochemical Co. Ltd., Hyogo-ken 672 (JP); MIZUKAMI, Tohru, Ibaraki-ken 306-02 (JP)
(74) Representative: Jackson, Peter Arthur
(86) International application number: JP9702782
(87) International publication number: WO9806572

(57) **Abstract**

The laminated article of the present invention has a first layer made of a coating compound, a second layer made of a polyolefin series adhesive resin, and a third layer made of a polypropylene series resin. The coating compound is made of a silica series coating material. A specific example for the polyolefin series adhesive resin is LDPE, L-LDPE, EVA, a resin having unsaturated carbonic acid partially graft-bonded to polyolefin, and so on. According to the aforementioned laminated article, stain removal function and anti-abrasion function of the coating material can be fully performed since the first layer is firmly bonded to the third layer through the second layer disposed therebetween.

## Description

### Technical Field

The present invention relates to a laminated article which comprises a coating layer, a poly-olefin base resin layer for bonding, and a polypropylene resin layer.

### Background Art

As a sort of decorative sheet for furniture, for instance, a laminated film which is composed of a polyvinyl chloride film provided with a print surface thereon and a polyvinyl chloride film for protection purpose has been used. Such a decorative sheet is adhered on the surface of a wooden substrate.

The laminated film comprising polyvinyl chloride has a disadvantage of causing environmental pollution by generating toxic gases such as hydrogen chloride, carbon monoxide, and benzene, etc. when it is burned. Therefore, a laminated film using polyolefin is proposed instead of polyvinyl chloride.

More specifically, a decorative sheet which uses polyolefin instead of polyvinyl chloride has been proposed (Japanese Patent laid-open No. Hei 6-198831), the decorative sheet having a structure in which a polyolefin base layer and a surface protective polyolefin layer are laminated with the aid of resin layer inbetween made of rubber series, acryl series, epoxy series, urethane series and so on, and a top coat layer containing a delustering agent such as silica and the like and thermosetting resin which serves as a paint vehicle, is formed further on these layers.

Further, a decorative sheet in which a polyolefin resin layer as a base layer is heat-laminated with an acryl resin layer as a protective layer, and a laminated decorative sheet in which the aforementioned two resin layers with a heat adhesive anchor made of urethane series or acryl series resin inbetween are laminated with each other, are proposed (Japanese Patent Laid-open Hei 6-262729).

The use of the decorative sheet or the laminated decorative sheet according to the aforementioned structure may find a way to overcome the disadvantage of generating toxic gases, but it is not necessarily sufficient in stain removal property, in other words, it is not sufficiently easy to remove stains when the decorative sheet is smeared by coffee or miso etc. And even when the sheet has a top coat layer containing silica on the surface thereof, it still has a disadvantage in view of anti-abrasion property which means the surface is not easily damaged, since such silica and the like serves only as a delustering agent. Additionally, it has another disadvantage on adhesion of the top coat layer and the surface protective layer.

### Disclosure of the Invention

A laminated article according to the present invention is characterized by having a first layer composed of a coating material, a second layer composed of a polyolefin series adhesive resin, and a third layer made of a polypropylene series resin.

The first layer has a stain removing function and a anti-abrasion function. Furthermore it has a function of stain-proof and it improves the gloss to make the print finish more attractive. A specific material is optional and it may be a silica paint, a UV setting resin (unsaturated polyester, urethane acrylate, epoxyacrylate, polyester acrylate, and so on). Titanium oxide and aluminum oxide and so on also can be used. The first layer containing a coating material is not limited to be completely transparent, but it may be slightly opaque.

The first layer can be formed by coating a solution of the material selected from the aforementioned substances. The solution may also be a colloidal solution or an emulsion solution or the like. As to coating method, a curtain coating, a gravure coating, a reverse roller coating, and a dip coating, etc. can be applied.

The second layer has a function to bond the first coating layer to the third polypropylene resin layer. Concrete examples of the second polyolefin adhesive resin layer are low density polyethylene (LDPE), linear low density polyethylene (L-LDPE), ethylene vinylacetate copolymer (EVA), random polypropylene (RPP), polyolefin thermoplastic elastomer (TPO), and others. And it may be a mixture of several substances selected from the aforesaid specific examples. Moreover, a mixture of the polyolefin adhesive resin with other resins (homo PP and the like) excluding the polyolefin adhesive resin can be used.

The thickness of the second layer is optional and it is, for instance, from 3 µm to 30 µm, preferably from 3 µm to 15 µm.

A polypropylene resin which comprises the third layer includes homo-polypropylene, random polypropylene, polyolefin thermoplastic elastomer (TPO) and so on.

The random polypropylene is a random polypropylene copolymer with ethylene.

The thickness of the third layer is also optional and it is, for instance, from 30 µm to 1100 µm.

The second layer and the third layer are usually formed into films made of the aforementioned resins. Though these films can either be oriented or non-oriented type, a non-oriented type film can be suitably used, since small extensibility is more desirable.

According to the laminated article of the present invention, the adhesion between the first layer and the second layer is excellent and the adhesion between the second layer and the third layer is also excellent, since the second layer is made from an adhesive resin. Consequently, as the adhesion of the first layer and the third layer with the aid of the second layer is excellent, the laminated article is able to give full play to the stain removing function and the anti-abrasion function.

The coating material can be prepared from silica series substance for coating.

The source of the silica series material for coating may be alkoxysilane.

A specific example of the aforementioned alkoxysilane is tetraethoxysilane Si(OEt)₄.

The silica coating material can include a catalyst for the silica source.

The catalyst is at least any one of those selected from acid, base, halogenide, a metal oxide, a substance having oxidation-reduction property, and a water-soluble ionic compound.

Halogenide for the catalyst is at least any one of those selected from acid chloride, acid bromide, acid fluoride, and acid iodide.

More specifically, it is, for instance, acid ammonium fluoride, NH₄F· HF.

The silica series coating compound can be a mixture containing organic polymers.

The organic polymer is added as a reactive agent. It is preferable that 10 to 20 units by weight of the organic polymer is mixed to 100 units by weight of alkoxysilane.

The organic polymer may be an acryl ester series resin.

The specific example of the acrylester series resin is, for instance, glycidyl polyacrylate.

The first layer can be formed by a continuous coating method with the coating compound.

In the continuous coating method, it is appropriate to set the dry temperature for the coating from 20 °C to 90 °C. And it is also appropriate to set the processing speed from 50 to 100 m/min.

Concrete examples of the continuous coating method are a gravure coating method, a curtain coating method, and a comma coating method.

The aforementioned third layer can be formed of a double-layer structure with the same polypropylene series resin.

The double-layer structure can be constructed by laminating two polypropylene resin films using a method of, for instance, dry-laminating. The sort of adhesives used for the dry-laminating is optional and an acrylate series adhesive, a cellulose series adhesive, an epoxy series adhesive and an urethane series adhesive can be used.

The thickness of each layer of the double layer structure is optional, and the thickness of one layer may be, for instance, from 10µm to 100 µm, and the thickness of the other layer may be from 20µm to 1000 µm.

Any one of opposing surfaces of the aforesaid double structure may be a print surface.

The contents printed on the print surface is optional and it may be information by letters or design of patterns.

Incidentally, by forming the print surface on a corona-discharge treated polypropylene resin layer, the affinity to printing ink is improved so that the print finish becomes good.

The laminated article may have a fourth layer containing at least one kind selected from polyolefin series adhesive resins in addition to the layers from the first layer to the third layer.

A specific example of the polyolefin series adhesive resin is the same as the specific example of the polyolefin series adhesive resin according to the first invention.

Since the fourth layer has the same adhesion property as the second layer, the fourth layer improves the adhesion between the laminated layer and a base layer when a laminated layer according to the fourth invention is arranged on the base layer.

The laminated article may have a fifth layer which is a base layer, in addition to the first to the fourth layers.

The base layer is made of, for instance, ① a metal plate such as stainless steel, steel, and aluminum, ② a plastic plate made of a thermoplastic resin and the like such as polyolefin, ③ wooden material such as plywood and MDF (intermediate density cellulose plate), ④ an inorganic plate made of plaster, mortar, and concrete, etc.

The polyolefin series adhesive resin can be a resin having a structure in which unsaturated carbonic acid is partially graft-bonded to a mixture composed of one or more than one kind of polyolefin.

The unsaturated carbonic acid is, for instance, maleic anhydride.

Concrete examples of the polyolefin are LDPE, L-LDPE, HDPE, EVA, homo PP, random PP, ethylene-buten-1 copolymer, ethylene-propylene copolymer, and polybutadiene, etc.

The polyolefin resins such as LDPE and L-LDPE can be used as the polyolefin series adhesive resin. These polyolefin series adhesive resins are especially excellent in adhesion property.

### Brief Description of Drawings

Fig. 1 is a cross sectional view of a laminated article according to a first embodiment of the present invention; and
Fig. 2 is a cross sectional view of a laminated article according to a second embodiment of the present invention.

### Best Mode for Carrying out the Invention

### First embodiment

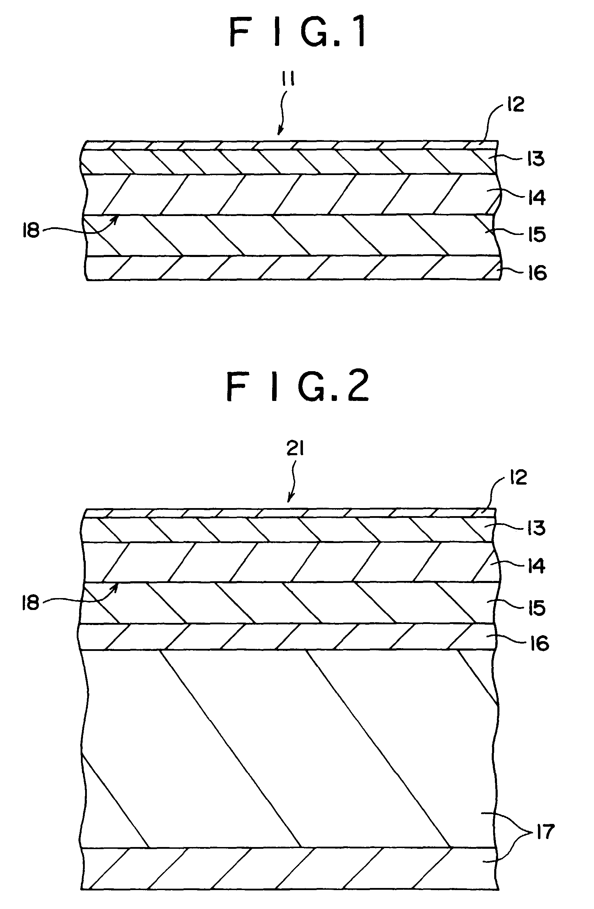

As shown in Fig. 1, a laminated article 11 according to the present embodiment has a first layer 12 composed of a coating agent, a second layer 13 composed of a polyolefin series adhesive resin, a third layer 14 and a fourth layer 15 composed of a polypropylene resin and a fifth layer 16 composed of a polyolefin resin.

Either one of opposing surfaces of the third layer 14 and the fourth layer 15 is a print surface 18.

### Second embodiment

As shown in Fig. 2, a laminated article 21 according to the present embodiment has a sixth layer 17 composed of a base layer, in addition to the first layer 12 to the fifth layer 16 of the first embodiment.

### Example 1

In the first embodiment, a laminated double layer film as the second layer 13 and the third layer 14 was made, using a multi-layered T-die casting film producing apparatus provided with two extruders each having a diameter of 30mm. The second layer 13 was made of EVA (VA content 12%), having a thickness of 8 µm. The third layer 14 was made of homo PP having 17 µm thickness. The corona-discharge treatment was done on both surfaces of the laminated double layer film. The treatment degree of the corona-discharge treatment was 36 dyn/cm.

After preparing two sheets of the laminated double layer film, a silica series coating compound was coated on the second layer 13 side of one of the two laminated films with a gravure coater so that the first layer 12 having a coating thickness of 5 µm was formed. The coating was carried out at a processing speed of 75m/min. in a drying temperature of 75°C.

The silica coating compound contains a main material, a catalyst, and a reacting agent, and was prepared as follows.

The main material was prepared by mixing 100 units by weight of tetraetoxysilane Si(OEt)₄ with 20 units by weight of a mixed solution of water, methanol, ethanol and isopropanol (1:1:1:4).

Acid fluoro ammonium NH4F·HF was used for the catalyst, and was prepared so that F ion concentration in the total weight of the catalyst and the mixed solution of the main material was 0.1mol/kg. A mixture of the main material and the catalyst by weight ratio of 3 : 1 was stirred for 10 minutes, the pH of the mixed solution was adjusted to 5.0 with acid chloride and ammonia water, and then the mixed solution was dehydrated and aged for three hours to cause hydrolysis and dehydro-condensation, thereby obtaining a stack solution of the coating compound. The silica coating compound was prepared by mixing the stock solution of the coating material and polyglycidyl acrylate as a reacting agent so that 15 units by weight of polyglycidyl acrylate was contained in 100 units by weight of tetra etoxysilane in the stock solution of the coating material.

The print surface 18 coated in black, white, and yellow by gravure coating, was formed on the third layer 14 side of the aforementioned laminated film.

Then, by dry-laminating one of the laminated films and the other laminated film composing fourth and fifth layers 15 and 16, a new laminated article 11 of the present example was prepared. The membranous property of the first layer 12 of the laminated article 11 was transparent and non-porous.

### Examples 2 to 6

laminated films 11 for each example were prepared in the same way as in the example 1, except for the kind of resins used for layers as shown in Table 1.

For instance, in example 2, the second layer 13 and the fifth layer 16 were composed of random PP.

In example 3, the second layer 13 and the fifth layer 16 were composed of L-LDPE. And the third layer 14 and the fourth layer 15 were composed of homo PP and L-LDPE (20%).

In example 4, the second layer 13 was composed of a mixture of EVA (20%) and homo PP, and the fifth layer 16 was composed of EVA.

In example 5, the second layer 13 was composed of a mixture of random PP (20%) and homo PP, and the fifth layer 16 was composed of EVA.

In example 6, the second layer 13 was composed of random PP, and the fifth layer 16 was composed of EVA.

In example 7, the second layer 13 and the fifth layer 16 were composed of LDPE. And the third layer 14 was composed of homo PP and LDPE (20%).

In example 8, the second layer 13 was composed of a LDPE resin with maleic anhydride partially graft-bonded. The third layer 14 was composed of homo PP and LDPE (20%) and the fifth layer 16 was composed of LDPE.

### Example 9

In the second embodiment, a homo PP film (180 µm thick) and an EVA film (20 µm thick) were co-extruded to be a base layer. The homo PP film side of the above co-extruded film was heat-bonded to the laminated article 11 of example 2 to prepare the laminated article 21 according to the present example.

### Comparison 1

In a laminated article, having layers from the first 12 to the fourth 15 according to the examples, the second layer 13 and the third layer 14 were made of a laminated homo PP film treated by a corona-discharge treatment on both sides, and the fourth layer 15 was made of homo PP film treated by a corona-discharge treatment on both sides (40 µm thick).

### Comparison 2

The present comparison was composed of the laminated article 11 according to the example 2, with the first layer 12 being removed.

### Comparison 3

The present comparison was composed of the laminated article according to the example 2, with the first layer 12 and the second layer 13 being removed.

**Table 1**

| | 1st layer | 2nd layer | 3rd layer | 4th layer | 5th layer | 6th layer |
|---|---|---|---|---|---|---|
| Example 1 | silica | EVA | HPP | HPP | EVA | ― |
| Example 2 | silica | RPP | HPP | HPP | RPP | ― |
| Example 3 | silica | L-LDPE | HPP+L-L | HPP+L-L | L-LDPE | ― |
| Example 4 | silica | EVA+HPP | HPP | HPP | EVA | ― |
| Example 5 | silica | RPP+HPP | HPP | HPP | EVA | ― |
| Example 6 | silica | RPP | HPP | HPP | EVA | ― |
| Example 7 | silica | LDPE | HPP+LDPE | HPP | LDPE | ― |
| Example 8 | silica | LDPE* | HPP+LDPE | HPP | LDPE | ― |
| Example 9 | silica | RPP | HPP | HPP | RPP | HPP/EVA |
| | | | | | | |
| Comparison1 | silica | HPP | HPP | HPP | | ― |
| Comparison2 | ― | RPP | HPP | HPP | RPP | ― |
| Comparison3 | ― | ― | HPP | HPP | RPP | ― |
| silica···silica paint HPP···homo polypropylene RPP···random polypropylene L-L···L-LDPE | | | | | | |

| | | | | | | |
|---|---|---|---|---|---|---|
| *···resin to which maleic anhydride is partially graft-bonded. | | | | | | |

The trade names of resins used in the aforementioned examples and comparisons are as follows.
EVA···EVAFLEX-EVA P1207 (VA content 12 wt %, M1:12 g /10 min), Manufactured by Mitsui Dupont Polychemicals Co., Ltd.
Random PP···IDEMITSU POLYPRO F-794N1 Manufactured by IDEMITSU PETROCHEMICAL Co., Ltd.
L-LDPE ··· MORETEC 0238CL Manufactured by IDEMITSU PETROCHEMICAL Co., Ltd.
Homo PP ··· IDEMITSU POLYPRO F-704N Manufactured by IDEMITSU PETROCHEMICAL Co., Ltd.
LDPE··· PETROCEN 205 Manufactured by TOSOH Corporation.

### Evaluation of characteristics

Evaluations were made on peelability, stain removal property, and anti-abrasion property for the laminated articles of the aforementioned examples from 1 to 9 and the comparisons from 1 to 3. These results are shown in table 2.

The peelability was evaluated with naked eyes to check whether peeling of the first layer might take place when a piece of an adhesive tape is stuck onto and peeled. The criterion of the evaluation is as follows. ○··· peeling of the first layer did not occur. X···peeling of the first layer occurred.

The stain removal property was evaluated with naked eyes to check the stains remaining when coffee, miso and curry are put on the first layer of each sample and wiped with a dry cloth. The criterion of the evaluation is as follows. ○···After wiping with a dry cloth, the stains were wiped off completely. X···After wiping with a dry cloth, the stains still remained.

The anti-abrasion property was evaluated by carrying out 50 times of a reciprocating rubbing test, in which No. 0000 steel wool was pressed on the surface of the first layer under the weight of 2.5N.

**Table 2**

| | Peelability by tape | Stain Removal property (wipe with a dry cloth) | | | Anti-abrasion property (reciprocatory test with steel wool) |
|---|---|---|---|---|---|
| | | coffee | miso | curry powder | |
| Exp. 1 | ○ | ○ | ○ | ○ | still perfect after 50 times |
| Exp. 2 | ○ | ○ | ○ | ○ | still perfect after 50 times |
| Exp. 3 | ○ | ○ | ○ | ○ | still perfect after 50 times |
| Exp. 4 | ○ | ○ | ○ | ○ | still perfect after 50 times |
| Exp. 5 | ○ | ○ | ○ | ○ | still perfect after 50 times |
| Exp. 6 | ○ | ○ | ○ | ○ | still perfect after 50 times |
| Exp. 7 | ○ | ○ | ○ | ○ | still perfect after 50 times |
| Exp. 8 | ○ | ○ | ○ | ○ | still perfect after 50 times |
| Exp. 9 | ○ | ○ | ○ | ○ | still perfect after 50 times |
| | | | | | |
| Comp. 1 | X | ○ | ○ | ○ | blush mark at 10 times |
| Comp. 2 | | X | X | X | blush mark at 10 times |
| Comp. 3 | | X | X | X | blush mark at 10 times |

From table 2, it is understood that each first layer 12 of the laminated articles 11, 21 of the examples from 1 to 9 is excellent in bonding property, since the first layer 12 made of the coating material is laminated on the third layer 14 which is made of polypropylene series resin, with the second layer 13 made of polyolefin adhesive resin therebetween, so that the first layer 12 is not peeled by the adhesive tape.

Since the laminated articles 11, 21 of the present examples are well adhered to the first layer 12 which is made of a coating compound having an excellent property in stain removal, stains of coffee, miso, or curry powder can be wiped off with a dry cloth.

Further, since the first layer 12 of coating material is in a good bonding condition, the laminated articles 11, 21 of the present examples are not damaged even after 50 times of reciprocating rubbing test with steel wool, showing that they have an excellent anti-abrasion property.

On the other hand, since the first layer 12 and the third layer 14 of the laminated article of the comparison 1 are laminated with each other with the second layer 13 made of homo PP therebetween, the first layer 12 is peeled by an adhesive tape, showing that the first layer 12 is not firmly bonded. And the anti-abrasion property is found to be also inferior since the peeling of the first layer 12 has occurred.

Though the laminated article in the comparison 2 has the second layer, it does not have the first layer 12 made of the coating compound. Therefore, it is inferior in the stain removal property and in the anti-abrasion property.

Since the laminated article in comparison 3 does not have the first layer, and the second layer, it is inferior in both the stain removal property and the anti-abrasion property.

### Industrial Availability

The laminated article of the present invention can be used for a surface layer of the interiors of building, furniture, household electrical appliances and so on.

## Claims

1. A laminated article comprising:
a first layer made of a coating compound;
a second layer made of a polyolefin series adhesive resin; and
a third layer made of a polypropylene series resin.

2. The laminated article according to claim 1, wherein said coating compound is made of a silica series coating material.

3. The laminated article according to claim 2, wherein a source of silica for said silica series coating compound is alkoxysilane.

4. The laminated article according to claim 3, wherein said alkoxysilane is tetraethoxysilane.

5. The laminated article according to claim 2 or 4, wherein said silica series coating compound contains a catalyst for the source for silica.

6. The laminated article according to claim 5, wherein said catalyst is at least one of those selected from acid, base, halogenide, metal oxide, a substances having any oxidation-reduction property, and water soluble ionic compounds.

7. The laminated article according to claim 6, wherein said halogenide is at least any one of those selected from acid chloride, acid bromide, acid fluoride, and acid iodide.

8. The laminated article according to claim 2, wherein said silica series coating compound is a mixture containing organic polymers.

9. The laminated article according to claim 8, wherein said organic polymer is an acrylester series resin.

10. The laminated article according to claim 9, wherein said acrylester series resin is glycidyl polyacrylate.

11. The laminated article according to claim 1, wherein said first layer is formed by a continuous coating method of the coating compound.

12. The laminated article according to claim 11, wherein said continuous coating method is any one of a gravure coating method, a curtain coating method, or comma coating method.

13. The laminated article according to any one of claims 1 to 12, wherein said third layer has double-layered structure of the same polypropylene series resin.

14. The laminated article according to any one of claims 1 to 13, wherein any one of the opposing surfaces of two layers of said polypropylene series resin is a print surface.

15. The laminated article according to any one of claims 1 to 14, further comprising a fourth layer containing at least one of those selected from polyolefin series adhesive resins, in addition to said first to third layers.

16. The laminated article according to claim 15, further comprising a fifth layer as a base layer in addition to said first to fourth layers.

17. The laminated article according to any one of claims 1 to 16, wherein said polyolefin series adhesive resin is a resin in which unsaturated carbonic acid is partially graft-bonded to a mixture composed of one or more than one kind of polyolefin.
